**Europäisches Patentamt**

**European Patent Office**

**Office européen des brevets**

(11) Veröffentlichungsnummer : **0 354 363 B1**

(12)                        **EUROPÄISCHE PATENTSCHRIFT**

(45) Veröffentlichungstag der Patentschrift :
**27.05.92 Patentblatt 92/22**

(51) Int. Cl.$^5$ : **F16D 1/09**

(21) Anmeldenummer : **89112551.0**

(22) Anmeldetag : **10.07.89**

---

(54) **Spannsatz mit Schraubmuffe.**

---

(30) Priorität : **06.08.88 DE 3826849**

(43) Veröffentlichungstag der Anmeldung :
**14.02.90 Patentblatt 90/07**

(45) Bekanntmachung des Hinweises auf die
Patenterteilung :
**27.05.92 Patentblatt 92/22**

(84) Benannte Vertragsstaaten :
**AT CH DE ES FR GB IT LI NL SE**

(56) Entgegenhaltungen :
**EP-A- 0 007 217**
**CH-A- 231 529**

(56) Entgegenhaltungen :
**CH-A- 265 280**
**FR-A- 2 029 116**
**FR-A- 2 091 735**
**GB-A- 624 872**
**US-A- 1 489 976**

(73) Patentinhaber : **Müllenberg, Ralph**
**Im Wiesengrund 6**
**W-4048 Grevenbroich 12 (DE)**

(72) Erfinder : **Müllenberg, Ralph**
**Im Wiesengrund 6**
**W-4048 Grevenbroich 12 (DE)**

(74) Vertreter : **Palgen, Peter, Dipl.-Phys. Dr.**
**Mulvanystrasse 2**
**W-4000 Düsseldorf (DE)**

**Beschreibung**

Die Erfindung bezieht sich auf einen Spannsatz der dem Oberbegriff des Anspruchs 1 entsprechenden Art.

Ein solcher Spannsatz ist aus der DE-A-34 44 608 bekannt. Die Ausbildung als Spannsatz bedeutet eine eine bauliche Einheit bildende Spannanordnung mit einer zylindrischen Innenumfangsfläche und einer zylindrischen Außenumfangsfläche, die z.B. in den Zwischenraum zwischen der Außenumfangsfläche einer Welle und die Innenumfangsfläche eines die Welle umgebenden äußeren Bauteils einsetzbar ist. Dadurch bedarf weder die Welle noch das festzuspannende äußere Bauteil einer besondere Bearbeitung der Umfangsflächen, insbesondere nicht der Anbringung konischer Flächen, was bei vielen insbesondere schweren Bauteilen einen erheblichen zusätzlichen Bearbeitungsaufwand erforderte.

Der bekannte Spannsatz umfaßt zwei Konusbüchsen, die beim Verspannen durch Anziehen der Schraubmuffe axial gegeneinander verlagert werden und sich dabei unter Abgleiten über die Konusflächen radial aufweiten, wodurch eine Verklemmung des äußeren Bauteils auf der Welle erfolgt. Die innere Konusbüchse trägt axial an die Konusfläche anschließend ein Außengewinde, auf welches die Schraubmuffe mit einem Innengewinde aufschraubbar ist. Die Schraubmuffe stützt sich axial gegen die äußere Konusbüchse ab und bewirkt bei ihrer Verdrehung die axiale Verlagerung desselben. Die Schraubmuffe greift mit einem axialen Ansatz, der am Ende einen radial nach außen vorspringenden Bund aufweist, unter elastischer Aufweitung des geschlitzten Endes der äußeren Konusbüchse einrastend in eine entsprechende Innenumfangsnut derselben ein, so daß die auf die innere Konusbüchse aufgeschraubte Schraubmuffe an der äußeren Konusbüchse axial sowohl ziehen als auch drücken und der Spannsatz mittels der Schraubmuffe sowohl gespannt als auch gelöst werden kann.

Ein ähnlicher Stand der Technik ist in der EP-A-7 217 dargestellt, wobei die Schraubmuffe jedoch in eine Außenumfangsnut des äußeren Konusrings eingreift.

Gemeinsam ist diesem Stand der Technik, daß zwar beim Spannen große axiale Kräfte durch direkte Anlage der Schraubmuffe aufbringbar sind, daß aber für das Lösen der Eingriff von radial vorspringenden Bunden in Nuten des anderen Elements notwendig ist, was einen zusätzlichen Aufwand bedeutet, konstruktiv meist schwer unterzubringen und insbesondere in der Aufnahmefähigkeit für axiale Kräfte Beschränkungen unterliegt, weil die Bunde nur die einrastende Flanke darbieten, deren Eingriffstiefe aus konstruktiven und/oder Montagegründen nicht groß sein kann. Wenn die Konuswinkel jedoch selbsthemmend sind und innerhalb des Selbsthemmungsbereichs sogar noch einen besonders flachen Konuswinkel aufweisen, so daß der Selbsthemmungseffekt stark ausgeprägt ist, sind die für das axiale Abziehen der Konusflächen voneinander erforderlichen Kräfte erheblich und übersteigen die mit den bekannten Konstruktionen auf bringbaren Werte jedenfalls bei größeren Durchmessern der Welle.

Der Erfindung liegt die Aufgabe zugrunde, einen gattungsgemäßen Spannsatz dahin auszugestalten, daß er mit hoher Kraft verspannt und gelöst werden kann.

Diese Aufgabe wird in einem ersten Aspekt durch die in Anspruch 1 wiedergegebene Erfindung gelöst.

Durch die Verwendung einer Schraubmuffe mit Gewinden unterschiedlicher Steigung können die die verspannenden Konusflächen tragenden Elemente je nach Drehrichtung sowohl axial aufeinandergezogen als auch axial auseinandergedrückt werden. Es bedarf dabei keiner äußeren Anschläge, weil die Schraubmuffe über die Gewinde mit beiden die Konusflächen tragenden Elementen axial verbunden und zur Übertragung sowohl der Spann- als auch die Lösekräfte in gleicher Größenordnung befähigt ist. Besondere Gestaltungen zum Lösen der Konusbüchsen, die zwar durch die selbsthemmenden Winkel die axialen Spannkräfte mit hohem Wirkungsgrad in radiale Klemmkräfte umsetzen, aber aus dem gleichen Grund nach erfolgter Verspannung auch nach Wegnahme der axialen Spannkräfte fest aufeinander sitzenbleiben, sind nicht erforderlich.

Ein Gewinde bietet entsprechend der Zahl seiner Flanken mehrere Anlagefläche dar, so daß die Belastung der einzelnen Anlagefläche auf einen entsprechenden Bruchteil verringert und die axial übertragbare Kraft verglichen mit den einrastenden Bunden des Standes der Technik wesentlich erhöht ist. Die Anbringung von Gewinden ist fertigungstechnisch einfacher als die Herstellung von hinterschnittenen Ausnehmungen und/oder Bunden, die dann bei der Montage auch noch elastischer Verformung mindestens eines der benachbarten Teile zum Einrasten gebracht werden müssen.

Eine Schraubmuffe mit gegenläufigen Gewinden ist für sich genommen an einer Rohrkupplung aus der DE-C-894 339 bekannt. Hierbei liegen aber die Konusflächen in gleicher Höhe mit der Schraubmuffe, so daß sich die radiale Bauhöhe der die Konusflächen tragenden Elemente und der Schraubmuffe addieren, was zu manchmal nicht zulässigen Ausladungen führt. Ein wichtiger Vorteil der Erfindung besteht hingegen darin, daß der Bereich der Schraubmuffe und der Spannbereich der Konusflächen axial hintereinanderliegen, so daß im Bereich der Konusflächen eine Konstruktion möglich ist, die radial von der Schraubanordnung unabhängig ist und im Klemmbereich der Konusflächen nur sehr wenig Platz benötigt. Die Innenumfangsfläche des äußeren

2

Bauteils braucht also nur einen relativ wenig größeren Durchmesser aufzuweisen als die Welle.

Eine Schraubmuffe mit gegenläufigen Gewinden ist auch aus der CH-A-265 280 für sich genommen bekannt. Hierbei handelt es sich jedoch nicht um einen Spannsatz, denn die eine Konusfläche ist direkt am äußeren Bauteil angebracht. Die Gewinde der Schraubmuffe sind als Innen- und Außengewinde ausgebildet, wodurch die radiale Bauhöhe der Anordnung steigt. Die Konuswinkel sind nicht selbsthemmend, wodurch das übertragbare Drehmoment nur relativ gering ist.

In einem zweiten Aspekt verwirklicht sich die Erfindung in dem Gegenstand des Anspruchs 2, der sich auf eine Bauform bezieht, die für sich genommen aus der US-A-4 268 185, Fig. 8 bekannt ist. Die Vorteile sind die gleichen wie bei der Ausführungsform nach Anspruch 1.

Bei der bevorzugten Ausführungsform nach Anspruch 3 weist die Schraubmuffe je ein Rechts- und Linksgewinde auf. Dies hat unter anderem den Vorzug, daß größere Spannwege zur Überwindung eines toleranzbedingten Spiels relativ schnell zurückgelegt werden können.

Die Alternative nach Anspruch 4 ist aber ebenfalls nicht ausgeschlossen. Bei gleichgerichteten Gewinden unterschiedlichen Steigungsbetrags entsteht ebenfalls eine Axialbewegung der Teile gegeneinander. Wenn kräftige Gewinde nur wenig unterschiedlicher Steigung gewählt werden, können mit einem bestimmten Drehmoment an der Schraubmuffe besonders hohe Axialkräfte und besonders hohe übertragbare Drehmomente erzeugt werden.

Die Radien der Gewinde können untereinander gleich oder verschieden sein (Anspruch 5,6). Es ist eine Frage der konstruktiven Auslegung im Einzelfall.

Um Verluste am Anzugsmoment durch die Gewindereibung zu vermeiden, kann es vorteilhaft sein, mindestens eines der Gewinde als Kugelumlaufgewinde auszubilden (Anspruch 7).

In der in erster Linie in Betracht kommenden Ausführungsform ist der Gewindeansatz am dünnwandigen Ende der äußeren Konusbüchse vorgesehen. Beim Anziehen wird die äußere Konusbüchse auf den inneren Konusteil heraufgezogen.

Wenn es darauf ankommt, bei dieser Ausführungsform das auf der äußeren Konusbüchse sitzende äußere Bauteil beim Anziehen in Achsrichtung zu Fixieren, kann gemäß Anspruch 9 ein Längsanschlag vorgesehen sein.

Eine wichtige Ausgestaltung dieser Ausführungsform ist Gegenstand des Anspruchs 10. Wenn sich die Konusflächen unter den Gewindeansatz erstrecken, wird dieser beim Anziehen des Spannsatzes ebenfalls aufgeweitet, wodurch sich die Gewindeüberdeckung an diesem Gewindeansatz bei zunehmender Spannkraft verbessert, d.h. die Anlagefläche im Gewinde sich vergrößert. Auf diese Weise kann die Flächenpressung in diesem Gewinde niedrigehalten werden.

Bei einer anderen in Betracht kommenden Ausführungsform gemäß Anspruch 11 erfolgt die Längsverschiebung des äußeren Konusrings nicht unter Zug, sondern durch Längsschub.

In diesem Fall kann zur Fixierung des äußeren Bauteils in Längsrichtung auf der Welle ein Längsanschlag beispielsweise in Form eines Durchmesserabsatzes vorgesehen sein.

Beim Anziehen der Schraubmuffe erfolgt im allgemeinen ohnehin kein Durchdrehen des inneren Konusrings ohne des inneren Konuskörpers, so daß keine besonderen Maßnahmen zur Drehfestlegung dieser Teile während des Anziehens erforderlich sind.

Um aber von der Haftung des inneren Konusrings an der Welle unabhängig zu sein und außerdem eine Drehmomentübersetzung zustandebringen zu können, empfiehlt sich ein sich am äußeren Bauteil abstützendes Drehwerkzeug gemäß Anspruch 13. Das Drehmoment beim Verspannen des Spannsatzes führt dann nur zu innerhalb der Spannanordnung verbleibenden Kräften, so daß ein Durchrutschen grundsätzlich nicht mehr möglich ist.

In der bevorzugten Ausführungsform gemäß Anspruch 14 umfaßt das Drehwerkzeug ein verzahntes Ritzel, dessen Teilkreisdurchmesser wesentlich kleiner als der Durchmesser der Schraubmuffe ist. Wenn durch geeignete Mittel, beispielsweise einen Schraubenschlüssel oder eine Kurbel an dem Ritzel gedreht wird, erfolgt eine Drehmomentübersetzung entsprechend dem Durchmesserverhältnis.

Die Gegenverzahnung zu dem Ritzel kann unmittelbar am Außenumfang der Schraubmuffe oder an einem besonderen, auf die Schraubmuffe drehfest aufsetzbarem Werkzeug vorgesehen sein, dessen Außenumfang dann die Verzahnung trägt (Ansprüche 15,16).

Das Werkzeug kann im allgemeinen nur von der Seite her auf die Schraubmuffe aufgesteckt werden, die dann einen polygonalen Außenumfang hat, auf den das Werkzeug in verschiedenen Winkelstellungen aufgebracht werden kann. Die Verzahnung braucht dann nicht über den ganzen Umfang zu gehen, sondern nur einen dem Winkelunterschied zwischen zwei verschiedenen Stellungen des Werkzeuges auf der Schraubmuffe entsprechenden Kreisbogen einzunehmen.

Zur Lagerung und Abstützung des Ritzels an dem äußeren Bauteil empfiehlt sich die Ausführungsform nach Anspruch 18, wobei der Zapfen in der Bohrung drehbar sein oder bei um den Zapfen drehbaren Ritzel festsitzen kann.

Die Drehmomentstütze der Ansprüche 19, 20 und 21 tritt bei einer Überschreitung des Grenzdrehmoments, also beim Durchrutschen des Spannsatzes in Funktion und führt je nach Drehsinn zu einem Lösen der Schraubmuffe, um Beschädigungen der Welle und des inneren Konusrings zu vermeiden, oder zu einem festeren Anziehen der Schraubmuffe und damit des Spannsatzes.

Fig. 1 zeigt eine Seitenansicht einer ersten Ausführungsform der Erfindung, teilweise in einem durch die Achse gehenden Längsschnitt;

Fig. 2 und 3 zeigen schematische Ansichten des Gewindebereichs der Schraubmuffe;

Fig. 4 zeigt eine Ansicht des oberen Teils einer weiteren Ausführungsform der Erfindung, teilweise in einem durch die Achse gehenden Längsschnitt;

Fig. 5 zeigt eine entsprechende Ansicht einer weiteren Ausführungsform;

Fig. 6 zeigt schematisch die Funktion eines Drehwerkzeugs;

Fig. 7 zeigt eine Teilansicht gemäß Fig. 6 von links;

Fig. 8 und 9 zeigen entsprechende Teilansichten weiterer Ausführungsformen des Drehwerkzeugs;

Fig. 10 und 11 zeigen Ansichten entsprechend den Fig. 7 bzw. 6 einer Ausführungsform mit Drehmomentstütze.

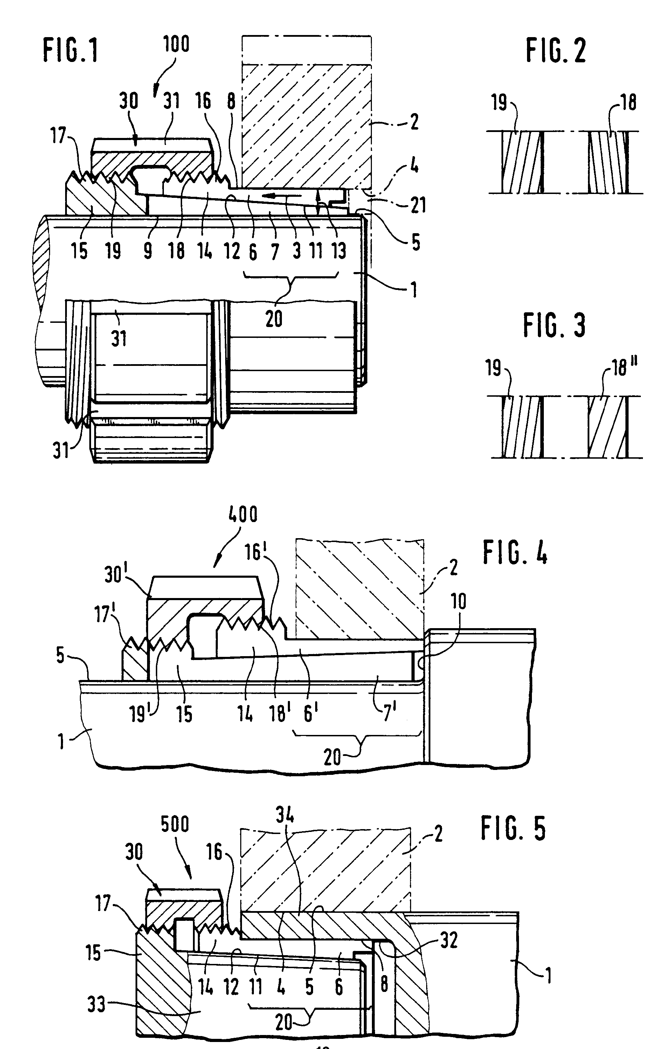

Mittels des Spannsatzes 100 der Fig. 1 ist auf einer das "innere Bauteil" bildenden Welle 1 ein darauf angeordnetes, strichpunktiert dargestelltes, das "äußere Bauteil" bildendes Zahnrad 2 festspannbar. Das Zahnrad 2 besitzt eine zentrale Ausnehmung mit einer zylindrischen Innenumfangsfläche 4, die einen etwas größeren Durchmesser aufweist als die zylindrische Außenumfangsfläche 5 der Welle 1, die konzentrisch in die Ausnehmung eingreift. In den Zwischenraum greifen die übereinander angeordneten rechten Enden einer äußeren Konusbüchse 6 und einer inneren Konusbüchse 7 ein. Die äußere Konusbüchse 6 weist eine zylindrische Außenumfangsfläche 8 auf, mit der sie an der Innenumfangsfläche 4 des äußeren Bauteils 2 anliegt. Die Innenumfangsfläche der äußeren Konushülse 6 bildet die "innere Konusfläche" 11 mit selbsthemmendem Konuswinkel, die auf der äußeren Konusfläche 12 der inneren Konushülse 7 anliegt, die wiederum mit ihrer zylindrischen Innenumfangsfläche 9 auf der zylindrischen Außenumfangsfläche 5 der Welle 1 sitzt.

Wenn die äußere Konusbüchse 6 im Sinne des Pfeiles 3 gegenüber der inneren Konusbüchse 7 axial verlagert wird, erfolgt im Bereich der Konusflächen 11, 12, d.h. im Spannbereich, eine radiale Aufweitung im Sinne des Pfeiles 13, wodurch das Zahnrad 2 auf der Welle 1 festgeklemmt wird.

Um möglichst viel von der aufgebrachten axialen Verlagerungskraft in radiale Spannkraft entsprechend dem Pfeil 13 umzusetzen, sind die Konusbüchsen 6,7 an einer Umfangsstelle durchgehend längsgeschlitzt, wie es bei der Konushülse 6 dadurch angedeutet ist, daß ihr Querschnitt im Ganzen nicht schraffiert ist. Die Schlitzung kann auch in Längsrichtung gesehen nur teilweise und dann an mehreren Umfangsstellen erfolgen, wie es bei der Konushülse 7 angedeutet ist.

Der axiale Bereich, in welchem die Konusbüchsen 6,7 sich in dem äußeren Bauteil 2 befinden und dort ihre Klemmkraft ausüben, ist der Spannbereich 20.

Die Konushülsen 6,7 weisen axial an den Spannbereich 20 anschließend, d.h. gemäß Fig. 1 links von dem das äußere Bauteil 2 bildenden Zahnrad, Gewindeansätze 14 bzw. 15 in Gestalt eines radial vorspringenden Bundes oder Umfangssteges mit Außengewinden auf. Der Gewindeansatz 14 trägt ein Rechtsgewinde 16, der Gewindeansatz 15 ein Linksgewinde 17 gleichen Durchmessers. Die Anordnung der Gewinde kann auch umgekehrt sein.

Auf den Gewinden 16,17 sitzt eine Schraubmuffe 30 mit zwei in Achsrichtung benachbarten Innengewinden 18,19, die mit den Gewinden 16 bzw. 17 zusammenwirken, wenn die Schraubmuffe beispielsweise durch den Angriff eines Drehwerkzeugs in über den Umfang verteilten Längsnuten 31 gedreht wird.

Bei der Drehung der Schraubmuffe 30 in einer Richtung wird die Konusbüchse 6 gegenüber der Konusbüchse 7 beispielsweise in der durch den Pfeil 3 angedeuteten Richtung verlagert, beim Drehen der Scrhaubmuffe 30 in der anderen Richtung in der entgegengesetzten Richtung. In der einen Richtung erfolgt ein Verspannen des äußeren Bauteils 2 auf der Welle 1, in der anderen Richtung ein Lösen der durch die Konusbüchsen 6,7 gebildeten selbsthemmenden Konusspannverbindung.

Aus Fig. 1 ist zu ersehen, daß die Schraubmuffe 30 und die Gewindeansätze 14,15 axial vom Spannbereich 20 getrennt sind und daß die Konusbüchsen 6,7 deswegen in radialer Richtung recht dünnwandig ausgeführt sein können, so daß der Durchmesser der Innenumfangsfläche 4 des äußeren Bauteils 2 nur relativ wenig größer sein muß als der Durchmesser der Außenumfangsfläche 5 der Welle 1.

Wenn es darum geht, daß das äußere Bauteil 2 beim Verspannen gegenüber der Welle 1 eine bestimmte Position beibehält, kann dies dadurch erreicht werden, daß am rechten Rand des Innenumfangs 4 ein nach innen vorspringender Umfangssteg 21 vorgesehen wird, der sich vor die äußere Stirnseite der inneren Konusbüchse 7 oder, wenn das äußere Bauteil 2 am Ende der Welle 1 befestigt werden soll, auch vor das Ende der Welle 1 legt.

In den Fig. 2 und 3 sind beispielsweise Gewindeausbildungen der Schraubmuffe 30 und entsprechend natürlich der Gewindeansätze 14,15 schematisch angedeutet, wobei entsprechende Gewindeausbildungen auch bei den weiteren noch zu beschreibenden Schraubmuffen vorhanden sein können. Die Gewindesteigung ist zur besseren Erkennbarkeit übertrieben dargestellt. In Fig. 2 ist das Gewinde 18 ein eingängiges Linksgewinde, das Gewinde 19 ein eingängiges Rechtsgewinde gleichen Steigungsbetrages. Die Steigungen können gewünschtenfalls aber auch unterschiedlich gewählt werden. Bei dem Ausführungsbeispiel der Fig. 3 ist das Gewinde 19 wieder ein eingängiges Rechtsgewinde und das Gewinde 18″ ebenfalls ein Rechtsgewinde jedoch mit doppeltem Steigungsbetrag. Auch bei dieser Ausführung verlagern sich die durch die Gewinde 19, 18″ angetriebenen Teile bei der Drehung der Schraubmuffe 30 axial gegeneinander.

Während bei dem Spannsatz 100 der Gewindeansatz 14 am dünnwandigen Ende der äußeren Konusbüchse 6 und der Gewindeansatz 15 am dickwandigen Ende der inneren Konusbüchse 7 angeordnet sind, ist diese Anordnung bei dem Spannsatz 400 der Fig. 4 umgekehrt. Der Gewindeansatz 14 sitzt am dickwandigen Ende der äußeren Konusbüchse 6′, der Gewindeansatz 15 hingegen am dünnwandigen Ende der inneren Konusbüchse 7′. Beim Anziehen der Schraubmuffe 30′ erfolgt das Verspannen im Spannbereich 20, indem die Konusbüchse 6′ auf die Konusbüchse 7′ hinaufgeschoben wird.

Ein weiterer Unterschied zu dem Spannsatz 100 besteht darin, daß die zusammenwirkenden Gewinde 16′,18′ einseits und 17′,19′ andererseits unterschiedliche Durchmesser aufweisen, so daß die Gewindebüchse 30′ eine Stufenbüchse ist.

Wenn der Spannsatz 400 in der aus Fig. 4 ersichtlichen Weise gegen eine Stufe 10 der Welle 1 gesetzt wird, so daß die in Fig. 4 rechte Stirnseite der äußeren Konusbüchse 6′ und/oder die rechte Seite des äußeren Bauteils 2 gegen die Stufe 10 anliegen, bleibt das äußere Bauteil 2 beim Verspannen des Spannsatzes 400 in Achsrichtung exakt stehen.

Bei dem Spannsatz 500 der Fig. 5 ist das äußere Bauteil 2, mit seiner zylindrischen Innenumfangsfläche 4 unmittelbar auf der zylindrischen Außenumfangsfläche 5 der Welle 1 an deren Ende angeordnet. Die Welle 1 besitzt eine koaxiale zylindrische Ausnehmung 32, die nur noch eine Umfangswandung 34 relativ geringer Restwandstärke beläßt. In der Ausnehmung 32 ist der Spannsatz 500 angeordnet, der eine äußere Konusbüchse 6 umfaßt, die axial außerhalb des Spannbereichs 20 einen Gewindeansatz 14 mit einem als Rechtsoder Linksgewinde ausgebildeten Außengewinde 16 außen vor der Stirnseite der Welle 1 aufweist.

In der Konusbüchse 6 ist ein konischer Innenkörper 33 angeordnet, der an seinem dickeren Ende axial außerhalb des Gewindeansatzes 14 einen radial vorspringenden Gewindeansatz 15 mit einem Außengewinde 17 trägt, welches gleichen Durchmesser, jedoch entgegengesetzte Steigung aufweist, wie das Außengewinde 16 auf dem Gewindeansatz 14. Mit den Gewinden 16,17 wirkt die Schraubmuffe 30 zusammen, die der Schraubmuffe 30 in Fig. 1 entspricht. Beim Verspannen des Spannsatzes 500 durch Drehen der Schraubmuffe 30 wird die Umfangswandung 34 der Ausnehmung 32 radial aufgeweitet und werden die Bauteile 1,2 an den Umfangsflächen 5,4 miteinander drehfest verklemmt.

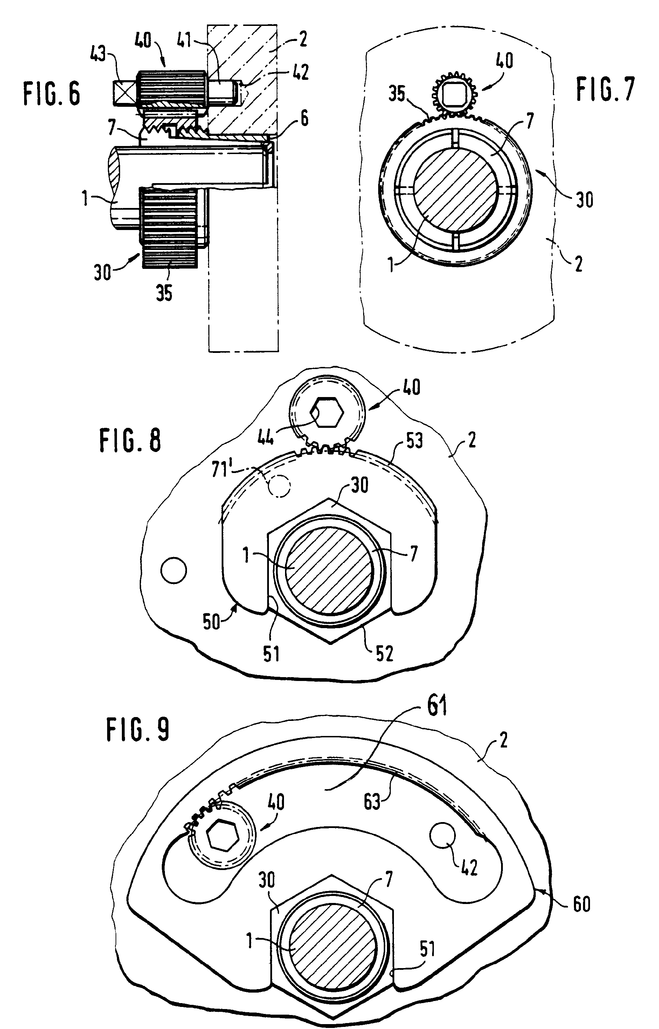

Anstatt zum Anziehen der Schraubmuffe 30 mit einem entsprechenden Drehwerkzeug, z.B. einem Hakenschlüssel in Nuten 31 am Umfang der Schraubmuffe 30 anzugreifen, kann gemäß den Fig. 6 bis 9 auch ein besonderes Drehwerkzeug vorgesehen sein.

In der Ausführungsform nach den Fig. 6 und 7 besitzt die Schraubmuffe 30 an ihrem Außenumfang eine Verzahnung 35, in die die Verzahnung eines Ritzels 40 eingreift, welches mit einem Zapfen 41 in einer achsparallelen Bohrung 42 des äußeren Bauteils 2 drehbar gelagert ist und am anderen Ende einen Ansatz 43 mit Schlüsselflächen aufweist, an denen eine Kurbel oder ein Schraubenschlüssel angreifen kann. Der Durchmesser des Teilkreises der Verzahnung des Ritzels 40 beträgt in dem Ausführungsbeispiel nur etwa ein Viertel des Teilkreises der Verzahnung 35, so daß bei einem bestimmten Drehmoment zur Drehung des Ritzels 40 auf die Schraubmuffe 30 etwa das vierfache Drehmoment ausgeübt wird. Eine alternative Ausführungsform ist in Fig. 8 wiedergegeben. Es ist ein Werkzeug 50 mit einem Schraubenschlüsselmaul 51 vorgesehen, welches auf einen Außensechskant 52 der Schraubmuffe 30 paßt. Auf der dem Maul 51 abgewandten Seite weist das Werkzeug 50 eine Verzahnung 53 auf, in die die Verzahnung des Ritzels 40 eingreift. Bei einer Drehung des Ritzels 40 an dem Innensechskant 44 wird die Schraubmuffe 30 ebenso gedreht wie bei der Ausführungsform nach den Fig. 6 und 7. Der Vorteil dieser Ausführungsform besteht darin, daß das Werkzeug 50 von der Seite auf die Schraubmuffe 30 aufgesteckt werden kann und also kein offenes Ende der Welle 1 benötigt wird und daß die Verzahnung 53 nur einmal, nämlich an dem Werkzeug 50 vorgesehen sein muß, während bei der Ausführungsform nach den Fig. 6 und 7 jede einzelne Schraubmuffe eine Verzahnung besitzen muß.

Wenn beim Festziehen der Schraubmuffe 30 nach Fig. 8 das Ritzel am Ende der sich nur über einen Winkel von etwa 90° erstreckenden Verzahnung 53 angekommen ist, wird das Werkzeug 50 auf der Schraubmuffe 30 entsprechend umgesteckt.

Das Werkzeug 60 in Fig. 9 unterscheidet sich dadurch von dem Werkzeug 50, daß statt der Außenverzahnung 53 eine kreisförmige Ausnehmung 61 mit einer an der radial äußeren Begrenzung angebrachten Verzahnung 63 vorgesehen ist, in die das Ritzel 40 von innen eingreift. Die kreisförmige Ausnehmung 61 des Werkzeugs 60 ist so breit, daß das Ritzel 40 in die äußere Verzahnung 63 eingreift und durch die innere Begrenzung der kreisförmigen Ausnehmung 61 nicht herausspringen kann.

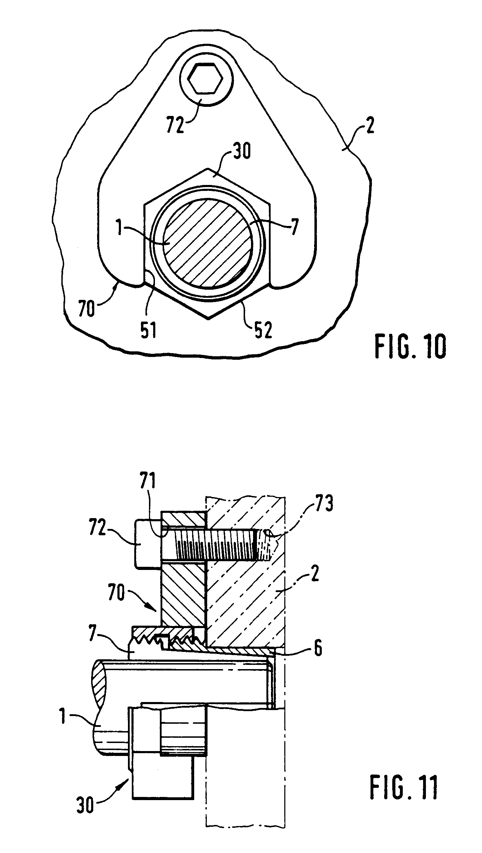

In den Fig. 10 und 11 ist eine Drehmomentstütze 70 dargestellt, die an dem fertig verspannten Spannsatz 6,7,30 angebracht wird. Die Schraubmuffe 30 hat in dem Ausführungsbeispiel wieder einen Außensechskant 52, und es ist die Drehmomentstütze 70 als Platte mit einem Schraubenschlüsselmaul 51 ausgebildet, welche auf den Außensechskant 52 paßt. Außerhalb des Schraubenschlüsselmauls 51, welches also einen dem Außenumfang 52 der Drehmomentstütze 70 angepaßten Ausschnitt bildet, ist eine Lochung 71 senkrecht zur Plattenebene vorgesehen, durch die eine Schraube 72 hindurch- und in eine Gewindebohrung 73 des äußeren Bauteils 2 eingreift. Die Drehmomentstütze 70 verbindet also die Schraubmuffe 30 drehfest mit dem äußeren Bauteil 2. Das ist aber nicht ihre eigentliche Funktion, denn die Konusringe 6,7 sitzen, wenn die Schraubmuffe einmal angezogen ist, wegen des selbsthemmenden Winkels ohnehin fest aufeinander. Die eigentliche Funktion der Drehmomentstütze 70 beginnt bei einer Überschreitung des Grenzdrehmoments des Spannsatzes, wenn dieser also auf der Welle 1 durchzurutschen beginnt. Dann nimmt das äußere Bauteil die Drehmomentstütze 70 und damit die Schraubmuffe 30 in Richtung des Drehmoments mit, wodurch je nach Anordnung der Gewinde ein Lösen der Konusringe 6,7 oder ein stärkeres Anziehen derselben stattfindet. Ersteres kann erwünscht sein, um im Falle eines zu großen Drehmoments sogleich eine Entlastung zu schaffen und zu verhüten, daß die zusammenwirkenden zylindrischen Flächen der Welle 1 und des Konusrings 7 ruiniert werden. Letzteres kann erwünscht sein, um das überhöhte Drehmoment durch sofortiges stärkeres Anziehen des Spannsatzes abzufangen. Bei gleichem Drehsinn kann die Wirkung der Drehmomentstütze 70 geändert werden, indem der Spannsatz herumgedreht und die Drehmomentstütze 70 auf der anderen axialen Seite des äußeren Bauteils 2 angebracht werden.

Eine Drehmomentstütze kann auch dadurch realisiert werden, daß zum Beispiel das Werkzeug 50 in Fig. 8 nach dem Anziehen an der Schraubmuffe 30 belassen und mittels einer außerhalb des Schraubenschlüsselmauls 51 angebrachten Schraube mit dem äußeren Bauteil 2 drehverbunden wird, die die strichpunktiert angedeutete Bohrung 71' durchgreift.

Die Dicke der Drehmomentstütze sollte nicht zu gering sein, damit die Schraubmuffe auch bei unterschiedlichen Positionen in Längsrichtung sicher erfaßt werden kann.

## Patentansprüche

1. Spannsatz zur Übertragung von Drehmomenten zwischen mindestens einem eine zylindrische Außenumfangsfläche (5) aufweisenden inneren Bauteil (1), insbesondere einer Welle, und mindestens einem eine Ausnehmung, in die das innere Bauteil (1) konzentrisch eingreift, aufweisenden äußeren Bauteil (2) mit einer zylindrischen Innenumfangsfläche (4), insbesondere einer Nabe,
mit einer äußeren Konusbüchse (6,6') mit einer zylindrischen, zur Anlage an der Innenumfangsfläche (4) des äußeren Bauteils (2) bestimmten Außenumfangsfläche (8) und einer dazu koaxialen inneren Konusfläche (11) mit im Selbsthemmungsbereich liegendem Konuswinkel,
mit einer inneren Konusbüchse (7,7') mit einer zylindrischen, zur Anlage an der Außenumfangsfläche (5) des inneren Bauteils (1) bestimmten Innenumfangsfläche (9) und einer dazu koaxialen äußeren Konusfläche (12) mit einem der inneren Konusfläche (11) gleichen Konuswinkel
und mit einer die innere Konusbüchse (7,7') umgebenden Schraubmuffe (30,30'), die mit einem Innengewinde (19) auf einen axial an den Spannbereich (20) der Konusfläche (12) anschließenden, zur Anordnung axial außerhalb einer Seite des äußeren Bauteils (2) bestimmten Gewindeansatz (15) mit Außengewinde (17,17') der inneren Konusbüchse (7,7') aufgeschraubt ist und mittels deren die Konusbüchsen (6,6';7,7') axial unter Abgleiten über die Konusflächen (11,12) gegeneinander anziehbar und voneinander wegdrückbar sind,
dadurch gekennzeichnet,
daß auch die äußere Konusbüchse (6,6') einen axial an den Spannbereich (20) der Konusfläche (11) anschließenden, zur Anordnung axial außerhalb des äußeren Bauteils (2) auf der gleichen Seite desselben bestimmten Gewindeansatz (14) mit Außengewinde (16,16') aufweist,
daß die Schraubmuffe (30,30') axial dem ersten Innengewinde (19,19') benachbart ein zweites Innengewinde (18,18') unterschiedlicher Steigung trägt
und daß das zweite Innengewinde (18,18') der Schraubmuffe (30,30') an dem Außengewinde (16,16') der äußeren Konusbüchse (6,6') angreift.

2. Spannsatz zur Übertragung von Drehmoment zwischen einem eine zylindrische Außenumfangsfläche (5) aufweisenden inneren Bauteil (1), insbesondere einer Welle, und mindestens einem eine zylindrische Innenumfangsfläche (4), die auf der zylindrischen Außenumfangsfläche (5) des inneren Bauteils (1) in der Nähe des axialen Endes des inneren Bauteils (1) angeordnet ist, aufweisenden äußeren Bauteil (2), insbesondere einer Nabe,

mit einer an dem Ende des inneren Bauteils (1) vorgesehenen offenen konzentrischen zylindrischen Ausnehmung (32),

mit einer Konusbüchse (6) mit einer zylindrischen, zur Anlage in der Ausnehmung (32) bestimmten Außenumfangsfläche (8) und einer dazu koaxialen inneren Konusfläche (11) mit im Selbsthemmungsbereich liegendem Konuswinkel,

mit einem konischen Innenkörper (33) mit einer äußeren, zur Anlage an der inneren Konusfläche (11) der Konusbüchse (6) bestimmten äußeren Konusfläche (12) mit einem der inneren Konusfläche (11) gleichen Konuswinkel

und mit einer Schraubanordnung, mittels deren die Konusbüchse (6) und der konische Innenkörper (33) unter Abgleiten über die Konusflächen (11,12) axial gegeneinander anziehbar und voneinander wegdrückbar sind,

dadurch gekennzeichnet,

daß der konische Innenkörper (33) einen axial an den Spannbereich (20) der Konusfläche (12) anschließenden, zur Anordnung axial außerhalb einer Seite des äußeren Bauteils (2) bestimmten Gewindeansatz (15) mit Außengewinde (17) aufweist,

daß die äußere Konusbüchse (6) einen axial an den Spannbereich (20) der inneren Konusfläche (11) anschließenden, zur Anordnung axial außerhalb des äußeren Bauteils (2) auf der gleichen Seite desselben bestimmten Gewindeansatz (14) mit Außengewinde (16) aufweist,

daß eine den konischen Innenkörper (33) umgebende Schraubmuffe (30) mit zwei axial einander benachbarten Innengewinden (18,19) unterschiedlicher Steigung vorgesehen ist

und daß das eine Innengewinde (19) der Schraubmuffe (30) an dem Außengewinde (16) der äußeren Konusbüchse (6), das andere Innengewinde (18) der Schraubmuffe (30) an dem Außengewinde (17) des konischen Innenkörpers (33) angreifen.

3. Spannsatz nach Anspruch 1 oder 2, dadurch gekennzeichnet, daß die Gewinde (18,19) ein Rechtsgewinde und ein Linksgewinde umfassen.

4. Spannsatz nach Anspruch 1 oder 2, dadurch gekennzeichnet, daß die Gewinde (18″,19) gleichgerichtete Gewinde unterschiedlichen Steigungsbetrags umfassen.

5. Spannsatz nach Anspruch 1 oder 2, dadurch gekennzeichnet, daß der Radius der Gewinde (16,18;17,19) unterschiedlicher Steigung gleich ist.

6. Spannsatz nach Anspruch 1 oder 2, dadurch gekennzeichnet, daß der Radius der Gewinde (16,18;17,19) unterschiedlicher Steigung verschieden ist.

7. Spannsatz nach einem der Ansprüche 1 bis 6, dadurch gekennzeichnet, daß mindestens eines der zusammenwirkenden Gewindepaare (16,18;17,19) als Kugelumlaufgewinde ausgebildet ist.

8. Spannsatz nach einem der Ansürüche 1 bis 7, dadurch gekennzeichnet, daß der Gewindeansatz (14) am dünnwandigen Ende der äußeren Konusbüchse (6) und der Gewindeansatz (15) am dickwandigen Ende der inneren Konusbüchse (7) bzw. des konischen Innenkörpers (33) angeordnet sind.

9. Spannsatz nach Anspruch 8, dadurch gekennzeichnet, daß am äußeren Bauteil (2) ein am Ende des inneren Konusrings (7) bzw. an einem Wellenende angreifender Längsanschlag (21) vorgesehen ist.

10. Spannsatz nach Anspruch 8 oder 9, dadurch gekennzeichnet, daß sich die Konusflächen (11,12) axial bis unter den dem äußeren Bauteil (2) zugewandten Gewindeansatz (14) erstrecken.

11. Spannsatz nach einem der Ansprüche 1 bis 7, dadurch gekennzeichnet, daß der Gewindeansatz (14) am dickwandigen Ende der äußeren Konusbüchse (6′) und der Gewindeansatz (15) am dünnwandigen Ende der inneren Konusbüchse (7′) bzw. des konischen Innenkörpers (33) angeordnet sind.

12. Spannsatz nach Anspruch 11, dadurch gekennzeichnet, daß auf dem inneren Bauteil (1) ein am äußeren Konusring (6′) und/oder am äußeren Bauteil (2) angreifender Längsanschlag (10) vorgesehen ist.

13. Spannsatz nach einem der Ansprüche 1 bis 12, dadurch gekennzeichnet, daß ein sich auf einer Drehachse (41) am äußeren Bauteil (2) abstützendes, am Umfang der Schraubmuffe (30,30′) angreifendes Drehwerkzeug vorgesehen ist.

14. Spannsatz nach Anspruch 13, dadurch gekennzeichnet, daß das Drehwerkzeug ein verzahntes Ritzel (409) umfaßt, dessen Teilkreisdurchmesser wesentlich kleiner als der Außendurchmesser der Schraubmuffe (30,30′) ist.

15. Spannsatz nach Anspruch 14, dadurch gekennzeichnet, daß die Schraubmuffe (30,30′) am Außenumfang eine dem Ritzel (40) entsprechende Verzahnung (35) aufweist.

16. Spannsatz nach Anspruch 14, dadurch gekennzeichnet, daß ein auf die Schraubmuffe (30) drehfest aufsetzbares Werkzeug (50,60) vorgesehen ist, an dessen Umfang die Verzahnung (53,63) vorgesehen ist.

17. Spannsatz nach Anspruch 16, dadurch gekennzeichnet, daß das Werkzeug (50,60) in verschiedenen Winkelstellungen auf die Schraubmuffe (30) aufsetzbar ist und die Verzahnung (53,63) einen mindestens einem Winkelschritt entsprechenden Kreisbogen einnimmt.

18. Spannsatz nach einem der Ansprüche 13 bis 17, dadurch gekennzeichnet, daß in dem äußeren Bauteil (2) eine achsparallele Bohrung (42) vorgesehen ist, in der das Ritzel (40) um einen Zapfen (41) drehbar ist.

19. Spannsatz nach einem der Ansprüche 1 bis 18, dadurch gekennzeichnet, daß eine am äußeren Bauteil (2) angreifende Drehmomentstütze (70) für die Schraubmuffe (30) vorgesehen ist.

20. Spannsatz nach Anspruch 19, dadurch gekennzeichnet, daß die Drehmomentstütze (70) als Platte ausgebildet ist, die einen dem von der Kreisform abweichenden Außenumfang (52) der Schraubmuffe (30) angepaßten Ausschnitt (51) sowie außerhalb des Ausschnitts (51) eine Lochung (71) für den Druchgriff eines in das äußere Bauteil (2) eingreifenden Bolzens (72) aufweist.

21. Spannsatz nach Anspruch 20, dadurch gekennzeichnet, daß die Drehmomentstütze durch das Werkzeug (50,60) gebildet ist, welches eine zusätzliche Lochung (71′) für den Durchgriff eines in das äußere Bauteil (2) eingreifenden Bolzens aufweist

## Claims

1. Clamping device for transmitting torques between at least one internal component (1) having a cylindrical external surface (5), in particular a shaft, and at least one external component (2) having an opening in which the internal component (1) engages concentrically, the external component having a cylindrical internal surface (4), in particular a hub,

with an outer coned bush (6,6′) with a cylindrical external surface (8) designed for engagement with the inner surface (4) of the external component (2) and an inner conical surface (11) co-axial with it, with a cone angle in the self-jamming range,

with an inner coned bush (7,7′) with a cylindrical inner surface (9) design for engagement on the external peripheral surface (5) of the internal component (1) and an outer conical surface (12) co-axial with it, having a cone angle equal to the inner conical surface (11)

and with a screwed sleeve (30, 30′) around the inner coned bush (7,7′) with an internal srrew-thread (19) on a threaded extension (15) which is axially adjacent the stress region (20) of the conical surface (12) designed for disposition axially clear of one side of the external component (2), screwed onto external threads, (17, 17′) on the inner coned bush (7, 7′) and by means of which the coned bushes (6,6′;7,7′) can be axially drawn together and pushed apart with sliding of the conical surfaces (11, 12),

characterised in that,

also the outer coned bush (6,6′) has a threaded extension (14) axially adjacent the stress region (20) of the conical surface 11, designed for disposition axially outside the external component (2) on the same side, with an external thread (16,16′),

that the screwed sleeve (30,30′) has axially adjacent the first internal screw-thread (19,19′) a second internal screw-thread (18,18′) of different pitch

and that the second internal screw-thread (18,18′) of the screwed sleeve (30,30′) engages the external screw-thread (16,16′) on the outer coned bush (6,6′).

2. Clamping device for transmitting torque between an internal component (1) having a cylindrical external surface (5), in particular a shaft, and at least one external component (2) in particular a hub, having a cylindrical internal surface (4) which is arranged on the cylindrical external surface (5) of the internal component (1) in the neighbourhood of the axial end of the internal component (1),

with an open concentric cylindrical recess (32) provided on the end of the internal component (1),

with a coned bush (6) with a cylindrical external surface (8) designed for engagement in the recess (32) and an inner conical surface (11) co-axial with it, with a cone angle lying on the self-jamming range,

with a conical inner body (33) with an outer conical surface (12) designed for engaging the inner conical surface (11) of the coned bush (6) with a cone angle equal to that of the inner conical surface (11)

and with a screw arrangement by means of which the coned bush (6) and the conical inner body (33) can be axially drawn together and urged apart with sliding of the conical surfaces (11,12),

characterised in that,

the conical inner body (33) has a threaded extension (15) with an external screw-thread (17) axially adjacent the stress region (20) of the conical surface (12) for disposition axially clear of one side of the external component (2),

that the outer coned bush (6) has a threaded extension (14) with an external screw-thread (16) axially adjacent the stress region (20) of the inner conical surface (11) designed for disposition axially clear of the external component (2) on the same side of the latter,

that a screwed sleeve (30) surrounding the conical inner body (33) is provided with two axially adjacent internal screw-threads (18,19) of different pitch

and that the one internal screw-thread (19) of the screwed sleeve (30) engages the external screw-thread (16) of the outer coned bush (6) and the other internal screw-thread of the screw (30) engages the external screw-thread (17) of the conical inner body (33).

3. Clamping device according to Claim 1 or 2, characterised in that the screw-threads (18,19) comprise a right-hand thread and a left-hand thread.

4. Clamping device according to Claim 1 or 2, characterised in that the thread (18",19) comprise threads of the same hand but different pitch.

5. Clamping device according to Claim 1 or 2, characterised in that the radius of the threads (16,18;17,19) of different pitch is equal.

6. Clamping device according to Claim 1 or 2, characterised in that the radius of the threads (16,18;17,19) of different pitch is different.

7. Clamping device according to one of Claims 1 to 6, characterised in that at least one of the pairs of co-operating screw-threads (16, 18; 17, 19) is formed as a recirculating ball thread.

8. Clamping device according to one of Claims 1 to 7, characterised in that the screw-threaded extension (14) is arranged on the thin-walled end of the outer coned bush (6) and the screw-threaded extension (15) is arranged on the thick-walled end of the inner coned bush (7) or of the conical inner body (33) .

9. Clamping device according to Claim 8, characterised in that a longitudinal stop (21) is provided on the external component (2) engaging the end of the inner coned ring or a shaft end.

10. Clamping device according to Claim 8 or 9, characterised in that the conical surfaces (11, 12) extend axially as far as below the threaded extension (14) which is towards the external component (2).

11. Clamping device according to one of Claims 1 to 7, characterised in that the screw-threaded extension (14) is arranged on the thick-walled end of the outer coned bush (6′) and the screw-threaded extension (15) is arranged on the thin-walled end of the inner coned bush (7′) or of the conical inner body (33).

12. Clamping device according to Claim 11, characterised in that a longitudinal stop (10) is provided on the internal component (1) engaging the outer coned ring (6′) and/or the external component (2).

13. Clamping device according to one of Claims 1 to 12, characterised in that a rotary tool is provided, supported on a pivotal axis (41) on the external component (2) and engaging the periphery of the screwed sleeve (30,30′).

14. Clamping device according to Claim 13, characterised in that the rotary tool comprises a toothed pinion (40) of which the arcuate diameter is substantially smaller than the outside diameter of the screwed sleeve (30,30′).

15. Clamping device according to Claim 14, characterised in that the screwed sleeve (30,30′) has on its outer periphery a set of teeth (35) matching the pinion (40).

16. Clamping device according to Claim 14, characterised in that a tool (50,60) is provided, capable of being fitted in a non-rotary manner onto the screwed sleeve (30) and provided on its periphery with the teeth (53,63).

17. Clamping device according to Claim 16, characterised in that the tool (50,60) can be fitted onto the screwed sleeve (30) in different angular positions and the teeth (53,63) occupy an arc corresponding to at least one angle step.

18. Clamping device according to one of Claims 13 to 17, characterised in that there is provided on the external component (2) a bore (42) which is parallel to the axis and in which the pinion (40) is rotatable around a spindle (41).

19. Clamping device according to one of Claims 1 to 18, characterised in that a torque lock (70) for the screwed sleeve (30) is provided engaging the external component (2).

20. Clamping device according to Claim 19, characterised in that the torque lock (70) is in the form of a plate which has a notch (51) matching the non-circular external periphery (52) of the screwed sleeve (30) and has beyond the notch (51) a hole (71) for engagement of a bolt (72) engaging in the external component (2).

21. Clamping device according to Claim 20, characterised in that the torque lock is formed by the tool (50, 60) which has an additional hole (71′) for entry of a bolt engaging in the external component (2).

## Revendications

1. Dispositif de blocage pour la transmission de couples de rotation entre au moins un élément de construction (1) intérieur présentant une surface périphérique extérieure (5) cylindrique, en particulier un arbre, et au moins un élément de construction extérieur (2) présentant un évidement, dans lequel l'élément de construction intérieur (1) vient concentriquement en prise avec une surface périphérique intérieure (4) cylindrique, en particulier un moyeu,

avec une douille conique extérieure (6, 6′), ayant une surface périphérique extérieure (8) cylindrique, déterminée pour venir en appui sur la surface périphérique intérieure (4) de l'élément de construction extérieur (2) et une surface conique (11) intérieure coaxiale à la surface (8), avec un angle de cône se trouvant dans la zone d'autocoincement.

avec une douille conique intérieure (7, 7′), ayant une surface périphérique intérieure (9) cylindrique, déterminée pour venir en appui sur la surface (5) périphérique extérieure de l'élément de construction intérieur (1) et une surface conique extérieure coaxiale à la surface (9), avec un angle de cône égal de la surface conique intérieure (11).

et avec une douille taraudée (30, 30′) entourant la douille conique intérieure (7, 7′), qui est vissée par un filetage intérieur (19) sur un embout fileté (15) avec filetage extérieur (17, 17′) de la douille conique intérieure (7, 7′) situé axialement à la suite de la zone de blocage (20) de la surface conique (12), déterminé pour être disposé axialement en dehors d'un côté de l'élément de construction (2) extérieur, les douilles coniques (6, 6′ ; 7, 7′) pouvant être serrées les unes contre les autres, au moyen des filetages, axialement en glissant sur les surfaces coniques (11, 12) et pouvant être écartées les unes des autres.

dispositif de blocage caractérisé en ce que :

la douille conique extérieure (6, 6′) présente un embout fileté (14) avec un filetage extérieur (16, 16′) faisant suite axialement à la zone de blocage (20) de la surface conique (11), déterminé pour être disposé axialement en dehors de l'élément de construction (2) sur le même côté de celui-ci.

la douille taraudée (30, 30′) porte axialement et au voisinage du premier filetage intérieur (19, 19′) un deuxième filetage intérieur (18, 18′) de pente différente, et le deuxième filetage intérieur (18, 18′) vient en prise avec le filetage extérieur (16, 16′) de la douille conique extérieure (6, 6′).

2. Dispositif de blocage pour la transmission d'un couple de rotation entre un élément de construction intérieur (1) présentant une surface périphérique extérieure (5) cylindrique, en particulier un arbre, et au moins un élément de construction (2) extérieur, en particulier un moyeu présentant une surface périphérique intérieure (4) cylindrique, qui est disposée sur la surface périphérique extérieure (5) cylindrique de l'élément de construction intérieur (1) au voisinage de l'extrémité axiale de l'élément de construction intérieur (1).

avec un évidement (32) prévu à l'extrémité de l'élément de construction intérieur (1), évidement ouvert, concentrique et cylindrique,

avec une douille conique (6) ayant une surface périphérique extérieure (8) cylindrique, déterminée pour venir en appui dans l'évidement (32) et une surface conique (11) intérieure coaxiale à la surface (8) avec un angle de cône se trouvant dans la zone d'autocoincement,

avec un corps intérieur conique (33) ayant une surface conique (12) extérieure déterminée pour venir en appui sur la surface conique intérieure (11) de la douille conique (6), avec un angle de cône égal à celui de la surface conique intérieure (11).

et avec un vissage au moyen duquel la douille conique (6) et le corps intérieur conique (33) peuvent être serrés axialement l'un contre l'autre ou écartés l'un de l'autre par glissement sur les surfaces coniques (11, 12),

dispositif de blocage caractérisé en ce que :

le corps intérieur conique (33) présente un embout fileté (15) avec un filetage extérieur (17) situé axialement à la suite de la zone de blocage (20) de la surface conique (12), déterminé pour être disposé axialement en dehors d'une face de l'élément de construction extérieur (2),

la douille conique extérieure (6) présente un embout fileté (14) avec un filetage extérieur (16) qui fait suite axialement à la zone de blocage (20) de la surface conique intérieure (11), déterminée pour être disposée axialement en dehors de l'élément de construction extérieur (2) sur le même côté de celui-ci,

une douille taraudée (30) entourant le corps intérieur conique (33) est pourvue de deux filetages intérieurs (18, 19) de pente différente voisins axialement l'un de l'autre,

et l'un des filetages intérieurs (19) de la douille taraudée (30) vient en prise sur le filetage extérieur (16) de la douille conique extérieure (6), l'autre filetage intérieur (18) de la douille taraudée (30) vient en prise sur le filetage extérieur (17) du corps intérieur conique (33).

3. Dispositif de blocage selon la revendication 1 ou 2, caractérisé en ce que les filetages (18, 19) comportent un filetage à droite et un filetage à gauche.

4. Dispositif de blocage selon la revendication 1 ou 2, caractérisé en ce que les filetages (18″, 19) comportent des filetages orientés dans le même sens dont les pentes sont d'importance différente.

5. Dispositif de blocage selon la revendication 1 ou 2, caractérisé en ce que le rayon des filetages (16, 18 ; 17, 19) de pente différente, est le même.

6. Dispositif de blocage selon la revendication 1 ou 2, caractérisé en ce que le rayon des filetages (16, 18 ; 17, 19), de pente différence, est différent.

7. Dispositif de blocage selon l'une des revendications 1 à 6, caractérisé en ce que l'une au moins des paires de filetage qui coopèrent (16, 18 ; 17, 19) est constituée comme un filetage à circulation de billes.

8. Dispositif de blocage selon l'une des revendications 1 à 7, caractérisé en ce que l'embout fileté (14) est disposé sur l'extrémité, à paroi mince de la douille conique extérieure (6) et l'embout fileté (15) sur l'extrémité, à paroi épaisse, de la douille conique intérieure (7) ou du corps intérieur conique (33).

9. Dispositif de blocage selon la revendication 8, caractérisé en ce que sur l'élément de construction extérieur (2) il est prévu une butée longitudinale (21) appliquée à l'extrémité de la bague conique intérieure (7) ou à l'extrémité de l'arbre.

10. Dispositif de blocage selon la revendication 8 ou 9, caractérisé en ce que les surfaces coniques (11, 12) s'étendent axialement jusqu'en-dessous de l'embout fileté (14) tourné vers l'élément de construction extérieur (2).

11. Dispositif de blocage selon l'une des revendications 1 à 7, caractérisé en ce que l'embout fileté (14) est disposé sur l'extrémité à paroi épaisse de la douille conique extérieure (6′) et l'embout fileté (15) sur l'extrémité à paroi mince de la douille conique intérieure (7′) ou du corps intérieur conique (33).

12. Dispositif de blocage selon la revendication 11, caractérisé en ce que, sur l'élément de construction intérieur (1) il est prévu une butée longitudinale (10) appliquée contre la bague extérieure (6′) et/ou contre l'élément de construction extérieur (2).

13. Dispositif de blocage selon l'une des revendications 1 à 12, caractérisé en ce qu'il est prévu un outil de tournage s'appuyant sur un axe de rotation (41) sur l'élément de construction extérieur (2), venant en prise sur le pourtour de la douille taraudée (30, 30′).

14. Dispositif de blocage selon la revendication 13, caractérisé en ce que l'outil de tournage comprend un pignon denté (40), dont le diamètre du cercle primitif de référence est sensiblement plus petit que le diamètre extérieur de la douille taraudée (30, 30′).

15. Dispositif de blocage selon la revendication 14, caractérisé en ce que la douille taraudée (30, 30′) présente sur son pourtour extérieur une denture (35) correspondant au pignon (40).

16. Dispositif de blocage selon la revendication 14, caractérisé en ce qu'il est prévu un outil (50, 60) pouvant être monté, solidaire en rotation, sur la douille taraudée (30), sur le pourtour duquel est prévue la denture (53, 63).

17. Dispositif de blocage selon la revendication 16, caractérisé en ce que l'outil (50, 60) peut être monté dans différentes positions angulaires sur la douille taraudée (30) et en ce que la denture (53, 63) occupe un arc de cercle correspondant au moins à un certain angle.

18. Dispositif de blocage selon l'une des revendications 13 à 17, caractérisé en ce que dans l'élément de construction extérieur (2) il est prévu un alésage parallèle à l'axe (42), dans lequel le pignon (40) peut tourner autour d'un tenon (41).

19. Dispositif de blocage selon l'une des revendications 1 à 18, caractérisé en ce qu'il est prévu un support de couple de rotation (70) pour la douille taraudée (30) venant en prise sur l'élément de construction (2).

20. Dispositif de blocage selon la revendication 19, caractérisé en ce que le support de couple de rotation (70) est formé comme une plaque, qui comporte une découpe (51) adaptée au pourtour extérieur (52) de la douille taraudée (30), s'écartant de la forme circulaire, ainsi qu'en dehors de la découpe (51) un trou (71) pour le logement d'un téton (72) venant en prise dans l'élément de construction extérieur (2).

21. Dispositif de blocage selon la revendication 20, caractérisé en ce que le support de couple de rotation est formé par l'outil (50, 60), qui présente un trou additionnel (71′) pour le passage d'un téton venant en prise dans l'élément de construction extérieur (2).

FIG.1

FIG. 2

FIG. 3

FIG. 4

FIG. 5

12

FIG. 6

FIG. 7

FIG. 8

FIG. 9

FIG. 10

FIG. 11